# EUROPEAN PATENT SPECIFICATION

(11) **EP 3 172 970 B1**
(45) Date of publication and mention of the grant of the patent: **30.01.2019**
(21) Application number: 16199970.1
(22) Date of filing: 22.11.2016
(51) Int. Cl.: A23G 9/22, A23G 9/28, A23C 9/12, A23G 9/08

(54) **MACHINE FOR LIQUID OR SEMI-LIQUID FOOD PRODUCTS**
MASCHINE FÜR FLÜSSIGE ODER HALBFLÜSSIGE NAHRUNGSMITTELPRODUKTE
MACHINE POUR PRODUITS ALIMENTAIRES LIQUIDES OU SEMI-LIQUIDES

(30) Priority: 25.11.2015 IT UB20155881
(43) Date of publication of application: 31.05.2017
(73) Proprietor: ALI GROUP S.r.l. - CARPIGIANI, 20063 Cernusco Sul Naviglio (MI) (IT)
(72) Inventor: COCCHI, Andrea, 40012 Calderara de Reno (Bologna) (IT); LAZZARINI, Roberto, 42100 Reggio Emilia (IT)
(74) Representative: Milli, Simone

(56) References cited:
- EP-A1- 1 064 852
- EP-A1- 1 829 453
- WO-A1-94/02027
- WO-A1-2014/188351
- US-A- 4 817 689
- US-A- 5 349 993
- US-A1- 2003 155 031
- US-B1- 6 176 090

## Description

This invention relates to a machine for ice cream products such as artisan gelato or soft ice cream.

In the technical field concerned, the operator dispenses the finished product using specific controls such as, for example, levers, pedals or pushbuttons which operate on an actuator adapted to allow dispensing the product.

A need which is strongly felt by operators, as well as users, is to be able to dispense the product with "hands free", that is, to allow dispensing the product without using their hands.

This is particularly strongly felt in cases where the operator has to handle with both hands a product or container - such as a cake, for example - into which a liquid base product has to be dispensed.

Document EP 1 829 453 A1 discloses an automatic machine for producing and dispensing semi-liquid products, in particular as ice cream, the machine comprising a tank (4) for containing a product to be processed to obtain the products (2), a feed and processing circuit (11) for said product to be processed, dispensing means (8) positioned at an outfeed end of the feed and processing circuit (11), actuator means (10) for operating the dispensing means (8), check and control means (9) for the actuator means (10) and sensor means (16) for detecting the quantity of product (2) dispensed, associated with the check and control means (9). The sensor means (16) comprise at least one device (16) designed to detect at least part of the profile of the product (2) dispensed.

Document US 2003/0155031 A1 discloses a touchless automatic fiber optic beverage/ice dispenser which dispenses ice and or beverages into a cup/container, without user or cup/container touching any part of the machine, for sanitary effortless product filling activation.

This invention has for an aim to provide a machine for liquid or semi-liquid food products which allows the product to be dispensed without operators having to use their hands.

According to the invention, this aim is achieved by a machine for making ice cream products forming the object of the invention and comprising the technical features set out in one or more of the appended claims.

The technical features of the invention, with reference to the above aims, are clearly described in the claims below and its advantages are apparent from the detailed description which follows, with reference to the accompanying drawings, which illustrate a nonlimiting example embodiment of the invention, and in which:
- Figure 1 is a schematic side view illustrating by way of example a machine of this invention for making ice cream products;
- Figure 2 is a graph which represents by way of example several possible modes of dispensing the ice cream product in the machine of the invention and in which the axis of ordinates is the flow rate of the product dispensed and the axis of abscissas, the time.

With reference to the accompanying drawings, the numeral 1 denotes a machine for making ice cream products.

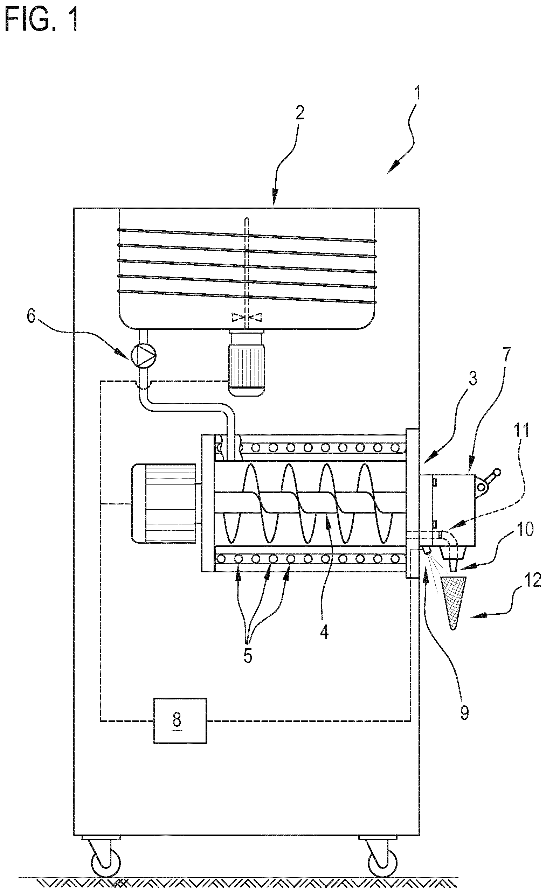

The machine 1 illustrated in Figure 1 comprises:
- a first container 3 adapted to contain a base mixture (during processing) or the finished product;
- a second container 2 connectable to the first container 3 to supply a base mixture (which will be transformed into the finished product in the first container 3).

Preferably, in the embodiment illustrated, the second container 2 is provided with a stirrer and respective thermal treatment means (not illustrated).

The first container 3 is also provided with a stirrer 4 adapted to stir the mixture (or base product) inside the first container 3 in order to transform it into finished product.

It should be noted that the stirrer 4 is connected to a drive motor.

Further, the first container 3 is provided with thermal treatment means 5 for thermally treating the base mixture, that is to say, the product inside the container itself.

Preferably, the thermal treatment means 5 also comprise a heat exchanger configured to exchange heat with the base mixture, that is to say, the product inside the container 3.

It should be noted that the thermal treatment means 5 comprise a system which operates according to a thermodynamic cycle.

Preferably, the thermal treatment means 5 also comprise a compressor, a throttling element and a further heat exchanger (which are not illustrated).

Preferably, in one embodiment, the thermal system may also allow the base mixture in the second container 2 to be heated.

The machine 1 comprises a dispensing device 7 connected to the first container 3 to allow dispensing the product inside the first container 3.

It should be noted that the container 3 is preferably a mixing and cooling cylinder.

Preferably, the first container 3 is cylindrical and has an opening at the front of it to provide access to the processing chamber inside it.

On the other hand, the second container 2 is, in the embodiment illustrated, a tank 2.

Alternatively, in an embodiment not illustrated, the second container 2 is a deformable container, preferably of the BIB ("bag in box") type.

The BIB container contains the base mixture and becomes deformed, thereby reducing its volume, as the mixture is drawn out of it.

It should be noted that the first and second containers are connected to each other so that, in use, the mixture can be transferred from the second container 2 to the first container 3.

According to the invention, the dispensing device 7 is connected to the first container 3 to allow dispensing the product inside the first container 3 and is provided with a dispensing outlet 10 (the dispensing outlet 10 connects the outside of the machine to the first container 3).

According to the invention, the machine 1 comprises an actuator 11 movable between an open position, where the dispensing outlet 10 is open, and a closed position, where the dispensing outlet 10 is closed.

Preferably, the actuator 11 is a shutoff valve.

Preferably, the actuator 11 is associated with the dispensing device 7.

It should be noted that when the actuator 11 is in the open position, the product can be dispensed, whereas when the actuator 11 is in the closed position, product dispensing is inhibited.

According to the invention, the machine 1 also comprises a sensor 9 configured to detect the presence of a container 12 at a predetermined spatial position, near the dispensing outlet.

According to the invention, the machine 1 comprises a control and drive unit 8, connected to the sensor 9 to receive a presence signal indicating the presence of an object at the predetermined spatial position and connected also to the actuator 11 in order to drive it.

The control and drive unit 8 is configured to drive the actuator 11 to move from the closed position to the open position after receiving from the sensor 9 a presence signal indicating the presence of the container 12 at the predetermined spatial position and to drive the actuator 11 to move from the open position to the closed position after subsequently receiving from the sensor 9 a non-presence signal indicating the absence of the container 12 at the predetermined spatial position.

It should be noted that the sensor 9 is preferably a proximity sensor.

The sensor 9 is preferably a sensor of the following type: an optical barrier, an ultrasonic sensor, a reflective optical sensor, an infrared sensor, a radar type electromagnetic wave sensor.

According to another aspect, the control and drive unit 8 is configured to adjust the position of the actuator 11 in such a way as to adjust a product flow cross section of the dispensing outlet 10, thereby adjusting the flow rate of the product being dispensed.

According to the invention, the control and drive unit 8 drives the actuator 11 to move from the closed position to the open position in such a way that the actuator 11 has a first (opening) speed and the control and drive unit 8 drives the actuator 11 to move from the open position to the closed position in such a way that the actuator has a second (closing) speed which is lower than the first speed.

It should be noted that the actuator 11 is movable to at least three positions: a closed position, a partly open position and a fully open position.

According to another aspect, it is described a method for dispensing a liquid or semi-liquid product in a machine for liquid and semi-liquid products as described in the foregoing comprising the following steps:
- detecting the presence of a container in a predetermined spatial region by means of the sensor 9;
- moving the actuator 11 from the closed position to the open position after detecting the presence of a container in the predetermined spatial region;
- moving the actuator 11 from the open position to the closed position after detecting the absence of a container in the predetermined spatial region.

According to the invention, following the step of moving the actuator 11 from the closed position to the open position after detecting the presence of a container in the predetermined spatial region, the method comprises a step of adjusting the quantity of product dispensed over time.

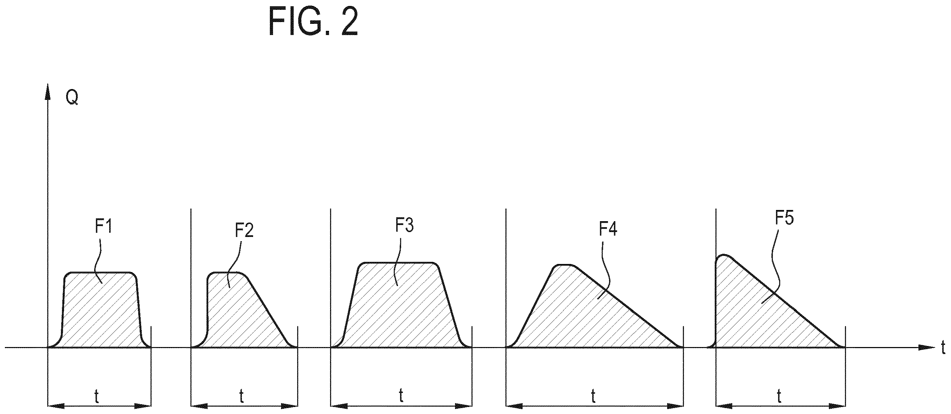

Figure 2 illustrates an example of a plurality of different modes of adjusting the quantity of product dispensed over time, that is to say, dispensing functions, where the axis of ordinates represents the quantity of product dispensed (that is, the product flow rate) and the axis of abscissas, the time.

According to an aspect, following the step of moving the actuator 11 from the closed position to the open position after detecting the presence of a container in the predetermined spatial region, the method comprises a step of adjusting the quantity of product dispensed over time according to a function of substantially rectangular type (function F1).

According to another aspect, following the step of moving the actuator 11 from the closed position to the open position after detecting the presence of a container in the predetermined spatial region, the method comprises a step of adjusting the quantity of product dispensed over time according to a function of substantially trapezoidal type (functions F2, F3).

According to another aspect, following the step of moving the actuator 11 from the closed position to the open position after detecting the presence of a container in the predetermined spatial region, the method comprises a step of adjusting the quantity of product dispensed over time according to a function of substantially triangular type (F4, F5).

According to another aspect, following the step of moving the actuator 11 from the closed position to the open position after detecting the presence of a container in the predetermined spatial region, the method comprises a step of adjusting the quantity of product dispensed over time according to a function of substantially right-angled triangle type (F5).

According to another aspect, following the step of moving the actuator 11 from the closed position to the open position after detecting the presence of a container in the predetermined spatial region, the method comprises a step of adjusting the quantity of product dispensed over time according to a function of substantially right-angled trapezium type (F2).

According to another aspect, following the step of moving the actuator 11 from the closed position to the open position after detecting the presence of a container in the predetermined spatial region, the method comprises a step of adjusting the quantity of product dispensed over time, that is to say, the flow rate of the product dispensed.

According to yet another aspect, the step of adjusting the quantity of product dispensed over time is accomplished by adjusting the rotation speed of the stirrer 4.

According to this aspect, the higher the rotation speed of the stirrer 5, the higher is the head, or pressure, of the product inside the first container 3, which in turn determines a higher rate of flow of product from the dispenser 7.

According to yet another aspect, the step of adjusting the quantity of product dispensed over time is accomplished by adjusting the cross section of the dispensing outlet 10.

In other words, according to this aspect, the cross section of the outlet 10 of the dispenser 7 is regulated in such a way as to dispense more or less product per unit time according to one of the functions illustrated (F1, F2, F3, F4, F5).

According to this aspect, the greater the cross section area of the outlet 10, the higher is the rate of flow of product from the dispenser 7.

It should therefore be noted that adjusting the area of the outflow cross section advantageously regulates the rate of flow of the product from the dispenser 7.

Advantageously, according to the method and the machine 1 provided by the invention, the operator can automatically fill a container located under the dispenser while leaving both hands free: this is particularly useful when filling or garnishing a cake, where the operator must hold the cake, that is, the container, with both hands.

It should be noted that this automatic dispensing function can be disabled by the user.

## Claims

1. A machine (1) for making ice cream products such as artisan gelato, soft ice cream, comprising:
- a first container (3) adapted to contain a base mixture or an ice cream finished product and also provided with respective means (5) for thermally treating the base mixture or the ice cream finished product and with a stirrer (4);
- a dispensing device (7) connected to the first container (3) to allow dispensing the product inside the first container (3) and provided with a dispensing outlet (10);
- an actuator (11), associated with the dispensing outlet (10) and movable between an open position, where the dispensing outlet (10) is open, and a closed position, where the dispensing outlet (10) is closed;
- a sensor (9) configured to detect the presence of a container (12) at a predetermined spatial position, near the dispensing outlet (10);
- a control and drive unit (8), connected to the sensor (9) to receive a presence signal indicating the presence of an object at the predetermined spatial position and connected also to the actuator (11) in order to drive it, the control and drive unit (8) being configured to drive the actuator (11) to move from the closed position to the open position after receiving from the sensor (9) a presence signal indicating the presence of the container (12) at the predetermined spatial position and to drive the actuator (11) to move from the open position to the closed position after subsequently receiving from the sensor (9) a non-presence signal indicating the absence of the container (12) at the predetermined spatial position, the machine being **characterised in that** the control and drive unit (8) drives the actuator (11) to move from the closed position to the open position in such a way that the actuator (11) has a first speed and the control and drive unit (8) drives the actuator (11) to move from the open position to the closed position in such a way that the actuator has a second speed, lower than the first speed.

2. The machine according to claim 1, wherein the sensor (9) is a proximity sensor.

3. The machine according to claim 2, wherein the sensor (9) is a sensor of the following type: an optical barrier, an ultrasonic sensor, a reflective optical sensor, an infrared sensor, a radar type electromagnetic wave sensor.

4. The machine according to any one of claims 1 to 3, wherein the actuator (11) is movable to at least three positions: a closed position, a partly open position and a fully open position.

5. The machine according to any one of the preceding claims, wherein the control and drive unit (8) is configured to adjust the position of the actuator (11) in such a way as to adjust a product flow cross section of the dispensing outlet (10), thereby adjusting the flow rate of the product being dispensed.

6. A method for dispensing an ice cream finished product in a machine according to any one of the preceding claims, comprising the following steps:
- detecting the presence of a container in a predetermined spatial region by means of the sensor (9);
- moving the actuator (11) from the closed position to the open position after detecting the presence of a container in the predetermined spatial region;
- moving the actuator (11) from the open position to the closed position after detecting the absence of a container in the predetermined spatial region, the method further
comprising, after the step of moving the actuator (11) from the closed position to the open position after detecting the presence of a container in the predetermined spatial region, a step of adjusting the quantity of product dispensed over time.

7. The method according to the preceding claim, wherein the step of adjusting the quantity of product dispensed over time is accomplished by adjusting the rotation speed of the stirrer (4).

8. The method according to claim 6, wherein the step of adjusting the quantity of product dispensed over time is accomplished by adjusting the cross section of the dispensing outlet (10).

9. The method according to either claim 7 or 8, comprising, after the step of moving the actuator (11) from the closed position to the open position after detecting the presence of a container in the predetermined spatial region, a step of adjusting the quantity of product over time according to a substantially rectangular function (F1).

10. The method according to either claim 7 or 8, comprising, after the step of moving the actuator (11) from the closed position to the open position after detecting the presence of a container in the predetermined spatial region, a step of adjusting the quantity of product over time according to a substantially trapezoidal function (F2, F3).

11. The method according to either claim 7 or 8, comprising, after the step of moving the actuator (11) from the closed position to the open position after detecting the presence of a container in the predetermined spatial region, a step of adjusting the quantity of product over time according to a substantially triangular function (F4, F5).

12. The method according to either claim 7 or 8, comprising, after the step of moving the actuator (11) from the closed position to the open position after detecting the presence of a container in the predetermined spatial region, a step of adjusting the quantity of product over time according to a substantially right-angled triangle function (F5).

## Patentansprüche

1. Maschine (1) zur Herstellung von Speiseeisprodukten wie handwerklich hergestelltem Eis, Softeis,
umfassend:
- einen ersten Behälter (3), der ausgelegt ist, um eine Basismischung für ein fertiges Speiseeisprodukt zu enthalten, und zudem versehen mit
jeweiligen Mitteln (5) zum thermischen Behandeln der Basismischung oder des fertigen Speiseeisprodukts und mit einem Rührer (4);
- eine Ausgabevorrichtung (7), verbunden mit dem ersten Behälter (3), um die Ausgabe des Produkts in den ersten Behälter (3) zu erlauben, und versehen mit einem Ausgabeauslass (10);
- ein Stellglied (11), assoziiert mit dem Ausgabeauslass (10) und bewegbar
zwischen einer offenen Position, in der der Ausgabeauslass (10) offen ist, und einer geschlossenen Position, in der der Ausgabeauslass (10) geschlossen ist;
- einen Sensor (9), der konfiguriert ist, um die Anwesenheit eines Behälters (12) an einer vorgegebenen räumlichen Position in der Nähe des Ausgabeauslasses (10) zu erfassen;
- eine Steuer- und Antriebseinheit (8), verbunden mit dem Sensor (9), um ein Anwesenheitssignal zu empfangen, das die Anwesenheit eines Objekts an einer vorgegebenen räumlichen Position angibt, und verbunden auch mit dem Stellglied (11), um dieses anzutreiben, wobei die Steuer- und Antriebseinheit (8) konfiguriert ist, um das Stellglied (11) anzutreiben, sich von der geschlossenen Position in die offene Position zu bewegen, nachdem vom Sensor (9) ein Anwesenheitssignal empfangen wurde, das die Anwesenheit des Behälters (12) an der vorgegebenen räumlichen Position angibt, und um das Stellglied (11) anzutreiben, sich von der offenen Position in die geschlossene Position zu bewegen, nachdem anschließend vom Sensor (9) ein Nichtanwesenheitssignal empfangen wurde, das die Abwesenheit des Behälters (12) an der vorgegebenen räumlichen Position angibt, wobei die Maschine **dadurch gekennzeichnet ist, dass** die Steuer- und Antriebseinheit (8)
das Stellglied (11) antreibt, um sich von der geschlossenen Position in die offene Position zu bewegen, sodass das Stellglied (11) eine erste Geschwindigkeit aufweist, und die Steuer- und Antriebseinheit (8) das Stellglied (11) antreibt, um sich von der offenen Position in die geschlossene Position zu bewegen, sodass das Stellglied eine zweite Geschwindigkeit aufweist, die geringer ist als die erste Geschwindigkeit.

2. Maschine nach Anspruch 1, wobei der Sensor (9) ein Näherungssensor ist.

3. Maschine nach Anspruch 2, wobei der Sensor (9) ein Sensor des folgenden Typs ist: eine optische Schranke, ein Ultraschallsensor, ein reflektierender optischer Sensor, ein Infrarotsensor, ein Sensor mit elektromagnetischen Wellen vom Radartyp.

4. Maschine nach einem der Ansprüche 1 bis 3, wobei das Stellglied (11) in mindestens drei Positionen bewegbar ist: eine geschlossene Position, eine teilweise offene Position und eine vollständig offene Position.

5. Maschine nach einem der vorhergehenden Ansprüche, wobei die Steuer- und Antriebseinheit (8) konfiguriert ist, um die Position des Stellglieds (11) so zu justieren, sodass ein Produktströmungsquerschnitt des Ausgabeauslasses (10) justiert wird, wodurch die Durchflussmenge des ausgegebenen Produkts justiert wird.

6. Verfahren zum Ausgeben eines fertigen Speiseeisprodukts in einer Maschine nach einem der vorhergehenden Ansprüche, umfassend die folgenden Schritte:
- Erfassen der Anwesenheit eines Behälters in einer vorgegebenen räumlichen Region mittels des Sensors (9);
- Bewegen des Stellglieds (11) von der geschlossenen Position in die offene Position, nachdem die Anwesenheit eines Behälters in der vorgegebenen räumlichen Region erfasst wurde;
- Bewegen des Stellglieds (11) von der offenen Position in die geschlossene Position, nachdem die Abwesenheit eines Behälters in der vorgegebenen räumlichen Region erfasst wurde, das Verfahren zudem
umfassend nach dem Schritt des Bewegens des Stellglieds (11) von der geschlossenen Position in die offene Position, nachdem die Anwesenheit eines Behälters in der vorgegebenen räumlichen Region erfasst wurde, einen Schritt zum Justieren der im Lauf der Zeit ausgegebenen Produktmenge.

7. Verfahren nach dem vorhergehenden Anspruch, wobei der Schritt zum Justieren der im Lauf der Zeit ausgegebenen Produktmenge ausgeführt wird, indem die Drehzahl des Rührers (4) justiert wird.

8. Verfahren nach Anspruch 6, wobei der Schritt zum Justieren der im Lauf der Zeit ausgegebenen Produktmenge ausgeführt wird, indem der Querschnitt des Ausgabeauslasses (10) justiert wird.

9. Verfahren nach Anspruch 7 oder 8, umfassend nach dem Schritt zum Bewegen des Stellglieds (11) von der geschlossenen Position in die offene Position, nachdem die Anwesenheit eines Behälters in der vorgegebenen räumlichen Region erfasst wurde, einen Schritt zum Justieren der Produktmenge im Lauf der Zeit nach einer im Wesentlichen rechteckigen Funktion (F1).

10. Verfahren nach Anspruch 7 oder 8, umfassend nach dem Schritt zum Bewegen des Stellglieds (11) von der geschlossenen Position in die offene Position, nachdem die Anwesenheit eines Behälters in der vorgegebenen räumlichen Region erfasst wurde, einen Schritt zum Justieren der Produktmenge im Lauf der Zeit nach einer im Wesentlichen trapezförmigen Funktion (F2, F3).

11. Verfahren nach Anspruch 7 oder 8, umfassend nach dem Schritt zum Bewegen des Stellglieds (11) von der geschlossenen Position in die offene Position, nachdem die Anwesenheit eines Behälters in der vorgegebenen räumlichen Region erfasst wurde, einen Schritt zum Justieren der Produktmenge im Lauf der Zeit nach einer im Wesentlichen dreieckigen Funktion (F4, F5).

12. Verfahren nach Anspruch 7 oder 8, umfassend nach dem Schritt zum Bewegen des Stellglieds (11) von der geschlossenen Position in die offene Position, nachdem die Anwesenheit eines Behälters in der vorgegebenen räumlichen Region erfasst wurde, einen Schritt zum Justieren der Produktmenge im Lauf der Zeit nach einer im Wesentlichen rechtwinkeligen Dreiecksfunktion (F5).

## Revendications

1. Machine (1) pour fabriquer des produits de crème glacée tels que la glace artisanale, la glace à l'italienne,
comprenant:
- un premier récipient (3) adapté pour contenir un mélange de base ou un produit fini de crème glacée et pourvu aussi de
moyens (5) respectifs, pour traiter thermiquement le mélange de base ou le produit fini de crème glacée, et d'un agitateur (4);
- un dispositif de distribution (7) relié au premier récipient (3), pour permettre la distribution du produit à l'intérieur du premier récipient (3), et pourvu d'une sortie de distribution (10);
- un actionneur (11), associé à la sortie de distribution (10) et mobile
entre une position d'ouverture, où la sortie de distribution (10) est ouverte, et une position de fermeture, où la sortie de distribution (10) est fermée;
- un capteur (9) configuré pour détecter la présence d'un récipient (12) en correspondance d'une position prédéterminée dans l'espace à proximité de la sortie de distribution (10);
- une unité de commande et d'entraînement (8) reliée au capteur (9), pour recevoir un signal de présence indiquant la présence d'un objet dans la position prédéterminée dans l'espace, et reliée aussi à l'actionneur (11) afin de l'entraîner, l'unité de commande et d'entraînement (8) étant configurée pour entraîner le déplacement de l'actionneur (11) de la position de fermeture à la position d'ouverture après réception par le capteur (9) d'un signal de présence indiquant la présence du récipient (12) dans une position prédéterminée dans l'espace et pour entraîner le déplacement de l'actionneur (11) de la position d'ouverture à la position de fermeture après réception ensuite par le capteur (9) d'un signal de non-présence indiquant l'absence du récipient (12) dans la position prédéterminée dans l'espace, la machine étant **caractérisée en ce que** l'unité de commande et d'entraînement (8)
entraîne le déplacement de l'actionneur (11) de la position de fermeture à la position d'ouverture de manière à ce que l'actionneur (11) ait une première vitesse et l'unité de commande et d'entraînement (8) entraîne le déplacement de l'actionneur (11) de la position d'ouverture à la position de fermeture de manière à ce que l'actionneur ait une seconde vitesse inférieure à la première vitesse.

2. Machine selon la revendication 1, dans laquelle le capteur (9) est un capteur de proximité.

3. Machine selon la revendication 2, dans laquelle le capteur (9) est un capteur du type suivant: un barrage optique, un détecteur à ultrasons, un capteur optique réfléchissant, un capteur infrarouge, un radar du type capteur à onde électromagnétique.

4. Machine selon l'une quelconque des revendications de 1 à 3, dans laquelle l'actionneur (11) est mobile sur au moins trois positions: une position de fermeture, une position d'ouverture partielle et une position d'ouverture complète.

5. Machine selon l'une quelconque des revendications précédentes, dans laquelle l'unité de commande et d'entraînement (8) est configurée pour régler la position de l'actionneur (11) de manière à régler une section transversale d'écoulement du produit de la sortie de distribution (10), pour ainsi régler le débit du produit étant distribué.

6. Procédé de distribution d'un produit fini de crème glacée dans une machine selon l'une quelconque des revendications précédentes, comprenant les étapes suivantes:
- détecter la présence d'un récipient dans une zone prédéterminée dans l'espace au moyen du capteur (9);
- déplacer l'actionneur (11) de la position de fermeture à la position d'ouverture après détection de la présence d'un récipient dans la zone prédéterminée dans l'espace;
- déplacer l'actionneur (11) de la position d'ouverture à la position de fermeture après détection de l'absence d'un récipient dans la zone prédéterminée dans l'espace, le procédé comprenant de plus, après l'étape consistant à déplacer l'actionneur (11) de la position de fermeture à la position d'ouverture après détection de la présence d'un récipient dans la zone prédéterminée dans l'espace, une étape consistant à régler la quantité de produit distribué au fil du temps.

7. Procédé selon la revendication précédente, dans lequel l'étape consistant à régler la quantité de produit distribué au fil du temps est accomplie en réglant la vitesse de rotation de l'agitateur (4).

8. Procédé selon la revendication 6, dans lequel l'étape consistant à régler la quantité de produit distribué au fil du temps est accomplie en réglant la section transversale de la sortie de distribution (10).

9. Procédé selon les revendications 7 ou 8, comprenant, après l'étape consistant à déplacer l'actionneur (11) de la position de fermeture à la position d'ouverture après détection de la présence d'un récipient dans la zone prédéterminée dans l'espace, une étape consistant à régler la quantité de produit au fil du temps selon une fonction (F1) substantiellement rectangulaire.

10. Procédé selon l'une des revendications 7 ou 8, comprenant, après l'étape consistant à déplacer l'actionneur (11) de la position de fermeture à la position d'ouverture après détection de la présence d'un récipient dans la zone prédéterminée dans l'espace, une étape consistant à régler la quantité de produit au fil du temps selon une fonction (F2, F3) substantiellement trapézoïdale.

11. Procédé selon l'une des revendications 7 ou 8, comprenant, après l'étape consistant à déplacer l'actionneur (11) de la position de fermeture à la position d'ouverture après détection de la présence d'un récipient dans la zone prédéterminée dans l'espace, une étape consistant à régler la quantité de produit au fil du temps selon une fonction (F4, F5) substantiellement triangulaire.

12. Procédé selon l'une des revendications 7 ou 8, comprenant, après l'étape consistant à déplacer l'actionneur (11) de la position de fermeture à la position d'ouverture après détection de la présence d'un récipient dans la zone prédéterminée dans l'espace, une étape consistant à régler la quantité de produit au fil du temps selon une fonction orthogonale (F5) substantiellement triangulaire.
